# EUROPEAN PATENT SPECIFICATION

(11) **EP 3 231 695 B1**
(45) Date of publication and mention of the grant of the patent: **30.09.2020**
(21) Application number: 16165335.7
(22) Date of filing: 14.04.2016
(51) Int. Cl.: B62J 1/10

(54) **LEATHER BICYCLE SADDLE**
LEDERFAHRRADSATTEL
SELLE DE BICYCLETTE EN CUIR

(43) Date of publication of application: 18.10.2017
(73) Proprietor: Hsu, Chung-Ying, Taichung City 420 (TW); Lai, Chien-Shun, Changhua City 500 (TW); Lee, Chia-Wen, Huatan Township 503 (TW)
(72) Inventor: Hsu, Chung-Ying, Taichung City 420 (TW); Lai, Chien-Shun, Changhua City 500 (TW); Lee, Chia-Wen, Huatan Township 503 (TW)
(74) Representative: Straus, Alexander

(56) References cited:
- GB-A- 296 203
- GB-A- 500 445
- GB-A- 864 451
- GB-A- 2 268 454
- TW-U- M 295 609
- US-A- 2 186 483

## Description

### BACKGROUND OF THE INVENTION

### 1. Field of the Invention

The present invention relates to bicycle saddles and more particularly, to a leather bicycle saddle.

### 2. Description of the Related Art

The covers of commercial bicycle saddles are mainly selected from the group of polyurethane and leathers. A bicycle saddle using a polyurethane cover generally has sponge or other elastic stuffing material (such as silicon rubber) stuffed therein to enhance the cushioning and shock absorbing effects. Bicycle saddles of this kind are suitable for use in different types of bikes. A leather bicycle saddle generally comprises a leather cover, an arc support for supporting the leather cover, and an adjustment and connection mechanism provided between the leather cover and the arc support. A leather bicycle saddle has a better texture and looking, however, because a leather bicycle saddle has no sponge or any other flexible material stuffed therein for cushioning, the leather cover will accurately transfer ground reaction forces to the buttocks of the bicycle rider, causing the bicycle rider to feel uncomfortable, and therefore, a leather bicycle saddle is not suitable for use in a mounting bike for off-road cycling, greatly limiting its applications.

Further, the tension of a leather bicycle saddle will become insufficient after a long use, causing the leather cover of the leather bicycle saddle to get depressed. In order to eliminate this problem, U.S Patent No. 9216788 B1 teaches the use of an adjustment screw bolt for driving an adjustment seat to move an arc support so that the arc support can stretch the leather cover of the leather bicycle saddle to achieve adjustment of the tension of the leather cover when it is moved. However, according to this prior art design, the tension of the leather cover will be slightly lowered after a long use of the leather bicycle saddle, at this time, the metal part of the arc support of the leather bicycle saddle and the metal screw sleeve that receives the adjustment screw bolt will be forced to continuously rub against each other as the bicycle rider shifts the center of gravity of the body during riding, producing disturbing noises.

### SUMMARY OF THE INVENTION

The present invention has been accomplished under the circumstances in view. It is the main object of the present invention to provide a leather bicycle saddle, which provides a good cushioning effect, effectively improving the riding comfort.

It is another object of the present invention to provide a leather bicycle saddle, which reduces generation of noises and allows quick adjustment of the tension of the leather cover to the optimal flex.

To achieve these and other objects of the present invention, a leather bicycle saddle comprises a leather cover, an arc support and an adjustment device. The arc support is mounted at the bottom side of the leather cover, having a front end thereof terminating in a head abutment portion and a rear end thereof affixed to a rear bottom side of the leather cover. The adjustment device is mounted at the bottom side of the leather cover, comprising a screw bolt holder, an adjustment screw bolt and an adjustment seat. The screw bolt holder is affixed to the front bottom side of the leather cover, comprising a stop wall and a through hole cut through the stop wall. The adjustment screw bolt comprises a bolt head and a screw shank. The bolt head is abutted against the stop wall of the screw bolt holder and is rotatably received in the through hole of the screw bolt holder, the screw shank having one end thereof fixedly connected to the bolt head. The adjustment seat comprises a seat block and a stop block. The seat block comprises a mounting slot and a screw hole. The mounting slot and the screw hole are kept apart. The mounting slot defines a close end and an opposing open end. The head abutment portion of the arc support is abutted against the close end of the mounting slot. The stop block is detachably engaged into the open end of the mounting slot and abutted against the head abutment portion of the arc support. The screw hole is adapted for receiving the screw shank of the adjustment screw bolt. The adjustment seat is forwardly turnable about the head abutment portion of the arc support from a horizontal position to an inclined position.

By means of the technical feature that the adjustment seat is forwardly turnable about the head abutment portion of the arc support from a horizontal position to an inclined position, the leather cover of the leather bicycle saddle provides a cushioning effect like a spring or sponge to reduce the impact between the buttocks of the bicycle rider and the leather bicycle saddle, improving the overall riding comfort. Further, as the mounting slot and the screw hole are kept apart, the head abutment portion of the arc support is prohibited from direct contact with the screw bolt holder and adjustment screw bolt of the adjustment device, preventing generation of noises and allowing quick adjustment of the tension of the leather cover according to the desired flex.

The invention is defined in the independent claims 1 and 7. Advantageous embodiments are set out in dependent claims 2-6 and 8-10.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an elevational view of a leather bicycle saddle in accordance with a first embodiment of the present invention.
FIG. 2 is an exploded view of the leather bicycle saddle in accordance with the first embodiment of the present invention.
FIG. 3 is a bottom view of the leather bicycle saddle in accordance with the first embodiment of the present invention.
FIG. 4 is a sectional view of a part of the first embodiment of the present invention, illustrating the relationship between the arc support and the adjustment device.
FIG. 5 is a rear side view of the adjustment device of the leather bicycle saddle in accordance with the first embodiment of the present invention.
FIG. 6a is a schematic applied view of the first embodiment of the present invention, illustrating the relative positioning between the arc support and the adjustment device as the center of gravity of the bicycle rider is normal.
FIG. 6b is a schematic applied view of the first embodiment of the present invention, illustrating the relative positioning between the arc support and the adjustment device as the center of gravity of the bicycle rider shifted forwards.
FIG. 7 is an exploded view of a leather bicycle saddle in accordance with a second embodiment of the present invention.
FIG. 8 is a sectional view of a part of the second embodiment of the present invention, illustrating the relationship between the arc support and the adjustment device.

### DETAILED DESCRIPTION OF THE INVENTION

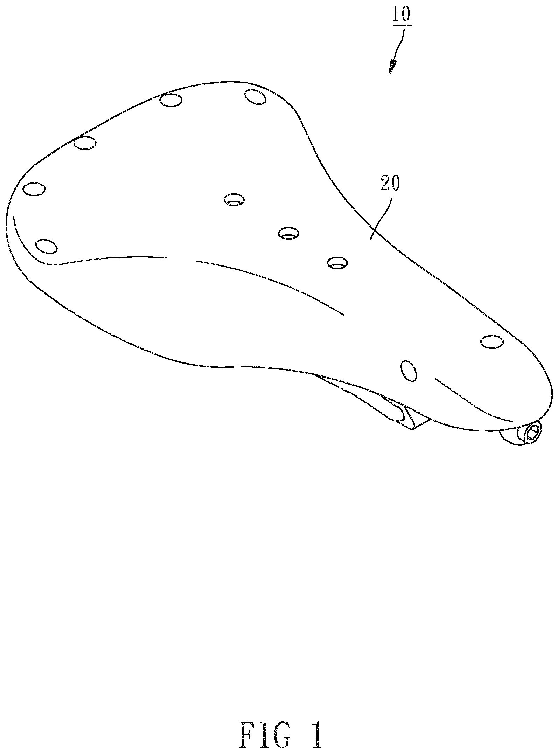

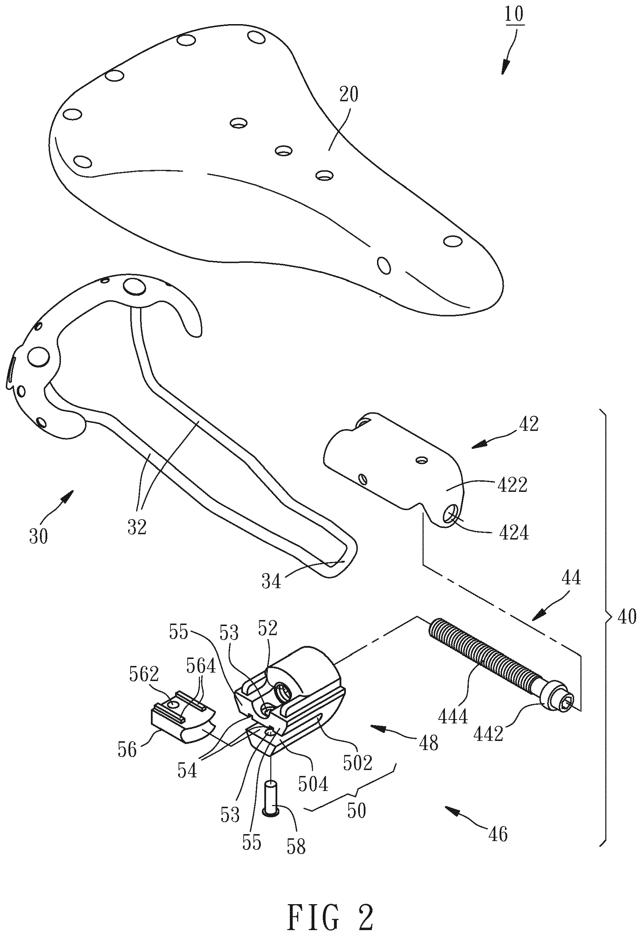

Referring to FIGS. 1 and 2, a leather bicycle saddle **10** in accordance with a first embodiment of the present invention is shown. The leather bicycle saddle **10** comprises a leather cover **20,** an arc support **30** and an adjustment device **40.**

The arc support **30** is mounted at a bottom side of the leather cover **20,** comprising two opposing support rods **32.** The two support rods **32** have respective front ends thereof connected to each other to form a head abutment portion **34,** and respective rear ends thereof affixed to a rear side of the leather cover **20.**

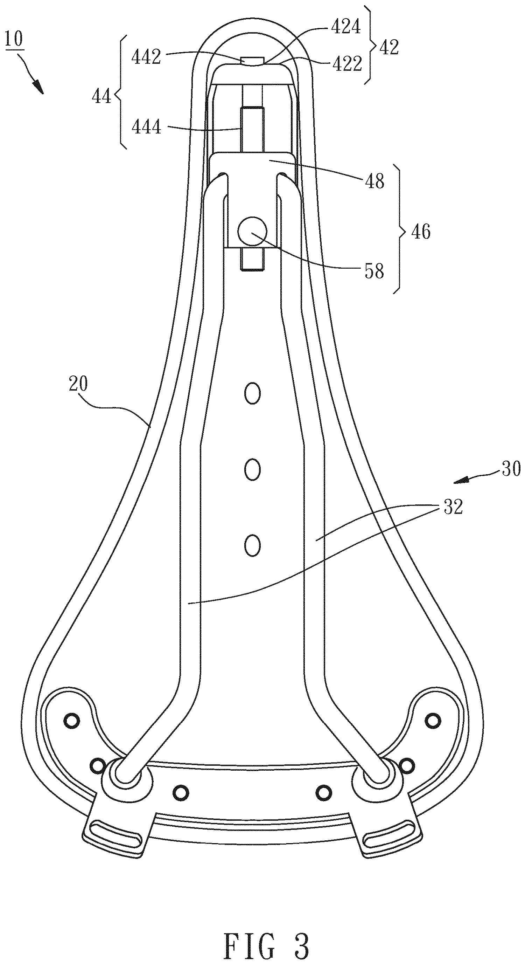

The adjustment device **40** is mounted at the bottom side of the leather cover **20,** comprising a screw bolt holder **42,** an adjustment screw bolt **44,** and an adjustment seat **46.** As illustrated in FIGS. 2 and 3, the screw bolt holder **42** is affixed to a front bottom side of the leather cover **20** by, for example, riveting. The screw bolt holder **42** comprises a stop wall **422** and a through hole **424** cut through the stop wall **422.** The adjustment screw bolt **44** comprises a bolt head **442** and a screw shank **444.** The bolt head **442** is abutted against the stop wall **422** of the screw bolt holder **42** and is rotatably received in the through hole **424** of the screw bolt holder **42.** The screw shank **444** has one end thereof connected to the bolt head **442.**

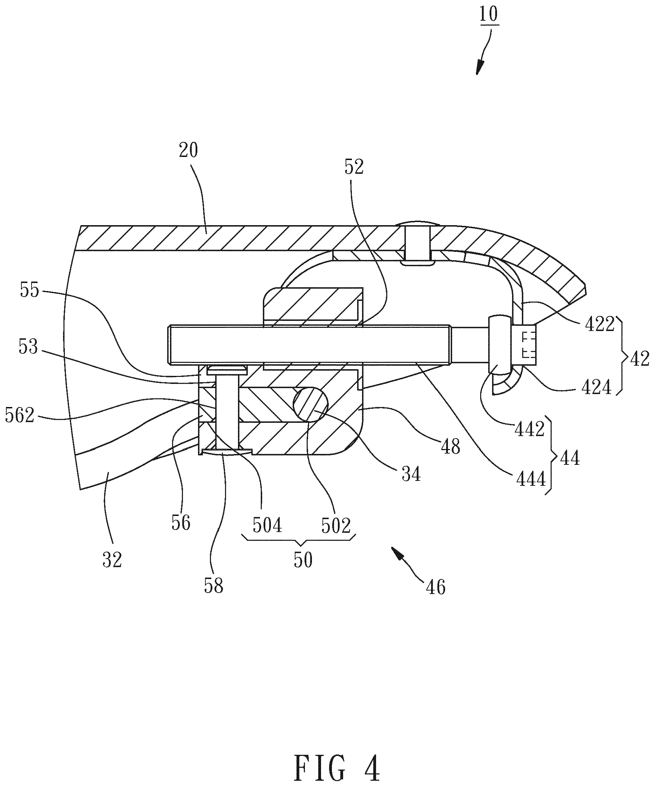

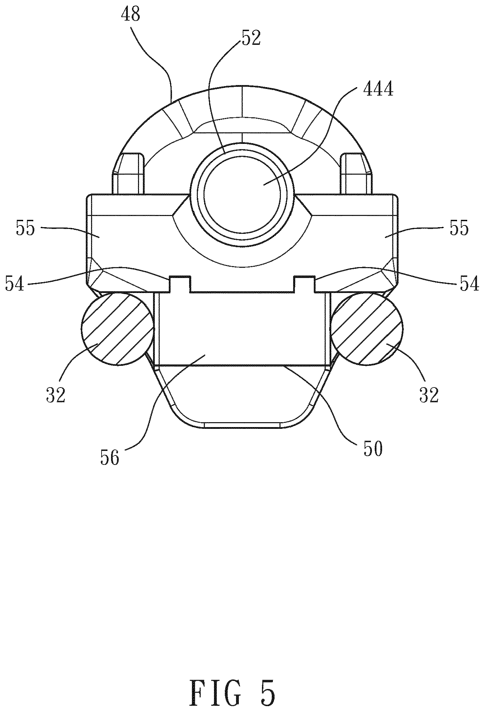

Referring to FIGS. 2, 4 and 5, the adjustment seat **46** comprises a seat block **48,** a stop block **56** and a fastener **58.** The seat block **48** comprises a mounting slot **50,** a screw hole **52** penetrating the seat block **48,** and two lugs **55.** The mounting slot **50** extends from a rear side of the seat block **48** toward an opposing front side thereof, defining an open end **504** and a close end **502.** The mounting slot **50** and the screw hole **42** are kept apart. The lugs **55** are disposed at two opposite lateral sides of the seat block **48** between the mounting slot **50** and the screw hole **52.** The head abutment portion **34** of the arc support **30** is stopped at the close end **502** of the mounting slot **50.** When the adjustment seat **46** is kept in horizontal, the top edges of the support rods **32** are abutted against the bottom edges of the lugs **55** of the seat block **48** of the adjustment seat **46.** The stop block **56** is detachably engaged in the open end **504** of the mounting slot **50** with one end thereof abutted against the head abutment portion **34** of the arc support **30.** The surface of the stop block **56** that is abutted against the head abutment portion **34** mates with the configuration of the head abutment portion **34.** Further, two first through holes **53** are respectively located in the seat block **48** at opposing top and bottom sides relative to the mounting slot **50.** The stop block **56** comprises a second through hole **562.** The fastener **58** is fastened to the first through holes **53** and the second through hole **562** to affix the stop block **56** to the mounting slot **50** of the seat block **48.** The screw hole **52** is adapted for receiving the screw shank **444** of the adjustment screw bolt **44.** Subject to the structure described above, the arc support **30** simply has the front part thereof abutted against the adjustment seat **46,** and is kept apart from the screw bolt holder **42** and the adjustment screw bolt **44** at a distance without contact.

Further, at least one locating groove **54** is located at one sidewall of the mounting slot **50,** for example, the top wall of the mounting slot **50;** the stop block **56** comprises at least one locating rib **564** fitting the at least one locating groove **54.** By means of putting the at least one locating groove **54** into engagement with the at least one locating rib **564,** the seat block **48** and the stop block **56** are prohibited from being forced by a lateral force to rotate or displace relative to each other. In this embodiment, two locating grooves **54** are located at the top wall of the mounting slot **50** and, the stop block **56** comprises two locating ribs **564** fitting the two locating grooves **54.** The gap, i.e., the vertical height of the open end **504** of the mounting slot **50** is slightly smaller than the thickness of the stop block **56** so that stop block **56** and the mounting slot **50** can be tightly mated with each other, avoiding displacement of the stop block **56** relative to the seat block **48** upon an external force during the process of the fastener 58 fastening to the first and second through holes **53, 562.**

Further, in order to prevent noises due to impact between the adjustment seat **46** and the arc support **30,** the contact area between the adjustment seat **46** and the arc support **30** is made out of plastics. In this embodiment, the seat block **48** and stop block **56** of the adjustment seat **46** are made out of engineering plastics and the peripheral wall of the screw hole **42** of the adjustment seat **46** is made of metal, and thus, the adjustment seat has high supporting strength and avoids noise generation.

After understanding of the structural details of the first embodiment, the operation and effects of the leather bicycle saddle **10** in accordance with the first embodiment of the present invention are outlined hereinafter.

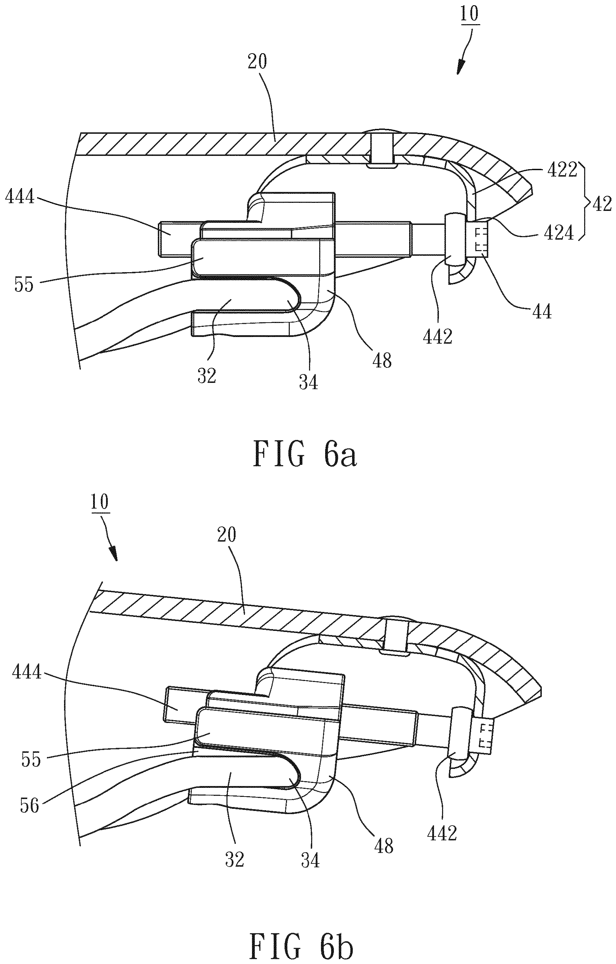

Referring to FIGS. 6a and 6b, the leather bicycle saddle **10** can be adjusted according to the riding conditions. When the bicycle rider is riding on a slopeless or smooth road surface, the center of gravity of the bicycle rider is normally located at the center of the bicycle saddle, at this time, the bottom edges of the lugs **55** of the seat block **48** of the adjustment seat **46** are respectively abutted against the top edges of the support rods **32** of the arc support **30** (see FIG. 6a). Further, when the bicycle rider is riding uphill from flat, the bicycle rider will mostly move the center of gravity of the body to the front end of the bicycle saddle to increase the grip strength of the front wheel of the bicycle and the feet pedaling force. At this time, the seat block **48** of the adjustment seat **46** can be turned forwardly about the head abutment portion **34** of the arc support **30** (see FIG. 6b) to balance the tension of the leather cover **20.** By means of biasing the seat block **48,** the leather cover **20** can be more fitting to the inner thighs and crotch of the bicycle rider, thereby increasing the riding comfort. In addition to the function of the adjustment of the angular position of the seat block **48** of the adjustment seat **46** to fit different road conditions, the biasable characteristic of the seat block **48** of the adjustment seat **46** works as a spring or sponge to provide a cushioning effect for reducing the impact between the buttocks of the bicycle rider and the leather bicycle saddle **10,** improving the overall riding comfort, in other words, the cushioning effect provided subject to the biasable characteristic of the seat block **48** makes the leather bicycle saddle **10** suitable for mounting bike applications.

Further, because the head abutment portion **34** of the arc support **30** is accommodated in the close end **402** of the mounting slot **40** and because the top edges of the support rods **32** of the arc support **30** are respectively abutted against the bottom edges of the respective of the lugs **55** of the seat block **48** of the adjustment seat **46,** the front ends of the support rods **32** can simply be kept in contact with the non-metal mounting slot **50,** lugs **55** and stop block **56** of the seat block **48** of the non-metal stop block **46** and without touching the meta screw bolt holder **42** and the metal adjustment screw bolt **44,** preventing generation of noises due to impact against metal materials. Further, the user can rotate the adjustment screw bolt **44** of the adjustment device **40** to adjust the tension of the leather cover **20** rapidly according to personal requirements.

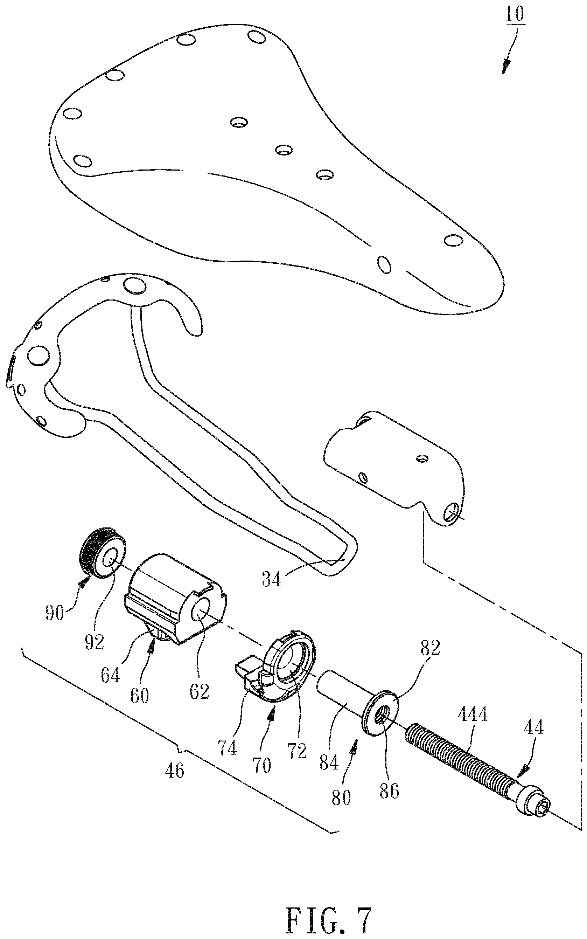

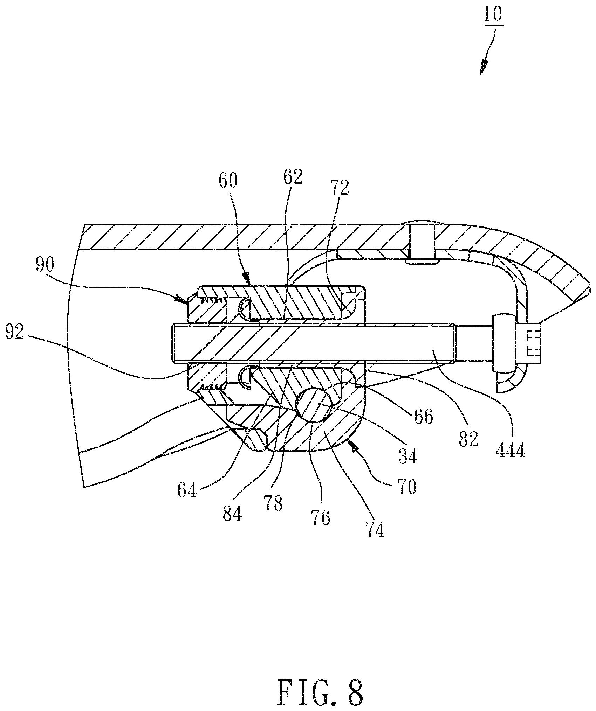

Referring to FIGS. 7 and 8, a leather bicycle saddle **10'** in accordance with a second embodiment of the present invention is shown. This second embodiment is substantially similar to the aforesaid first embodiment with the exceptions as follows:
The adjustment seat **46'** comprises a seat block **60,** a locating block **70** detachably fastened to the seat block **60** and a screw-in sleeve **80.** The seat block **60** comprises a first through hole **62** and a first clamping portion **64.** In this embodiment, the first clamping portion **64** is located at a bottom side of the seat block **60,** defining a first clamping groove **66** that faces downward. The locating block **70** comprises a second through hole **72** corresponding to the first through hole **62,** and a second clamping portion **74.** The second clamping portion **74** defines a second clamping groove **76.** After fixation of the locating block **70** to the seat block **60,** the first through hole **62** and the second through hole **72** are kept in axial alignment, the first clamping groove **66** and the second clamping groove **76** are combined to create a retaining hole **78** for securing the head abutment portion **34.**

The screw-in sleeve **80** is made of metal, comprising a head **82,** a shank **84** extended from the head **82,** and a screw hole **86** cut through the head **82** and the shank **84.** In installation, the shank **84** of the screw-in sleeve **80** is inserted through the second through hole **72** of the locating block **70** into the first through hole **62** of the seat block **60,** and then riveted to the seat block **60.** After installation, the head **82** of the screw-in sleeve **80** is stopped against one side of the locating block **70,** and, the screw hole **86** of the screw-in sleeve **80** is threaded onto the screw shank **444** of the adjustment screw bolt **44.**

The adjustment seat **46'** further comprises a rear cap **90** detachably fastened to the seat block **60** opposite to the locating block **70.** The rear cap **90** defines therein a rear cap through hole **92.** After fixation of the rear cap **90** to the seat block **60,** the rear cap through hole **92** of the rear cap **90** is kept in axial alignment with the first and second through holes **62,72.** Further, the rear cap through hole **92** is adapted for the passing of the adjustment screw bolt **44.** The arrangement of the rear cap **90** prevents accumulation of dust or rainwater in the seat block **60.**

The other structural details and effects of this second embodiment are substantially similar to the aforesaid first embodiment, and thus, no further detailed description in this regard will be necessary.

Although particular embodiments of the invention have been described in detail for purposes of illustration, various modifications and enhancements may be made without departing from the scope of the invention. Accordingly, the invention is not to be limited except as by the appended claims.

## Claims

1. A leather bicycle saddle (10), comprising:
a leather cover (20);
an arc support (30) mounted at a bottom side of said leather cover (20), said arc support (30) having a front end terminating in a head abutment portion (34) and an opposing rear end affixed to a rear side of said leather cover (20); and
an adjustment device (40) mounted at said bottom side of said leather cover (20), said adjustment device (40) comprising a screw bolt holder (42), an adjustment screw bolt (44) and an adjustment seat (46), said screw bolt holder (42) being affixed to a front bottom side of said leather cover (20) and comprising a stop wall (422) and a through hole (424) located at said stop wall (422), said adjustment screw bolt (44) comprising a bolt head (442) and a screw shank (444), said bolt head (442) being abutted against said stop wall (422) of said screw bolt holder (42) and being rotatably received in said through hole (424) of said screw bolt holder (42), said screw shank (444) having one end thereof fixedly connected to said bolt head (442), said adjustment seat (46) comprising a seat block (48) and a stop block (56), said seat block (48) defining therein a mounting slot (50) and a screw hole (52), said mounting slot (50) and said screw hole (52) being kept apart, said mounting slot (50) defining a close end (502) and an opposing open end (504), said head abutment portion (34) of said arc support (30) being abutted against said close end (502) of said mounting slot (50), wherein said stop block (56) is detachably engaged into said open end (504) of said mounting slot (50), and said screw hole (52) is adapted for receiving said screw shank (444) of said adjustment screw bolt (44), said adjustment seat (46) being forwardly turnable about said head abutment portion (34) from a horizontal position to an inclined position.

2. The leather bicycle saddle (10) as claimed in claim 1, wherein said seat block (48) of said adjustment seat (46) comprises two lugs (55); said arc support (30) comprises two support rods (32) and a head abutment portion (34) connected between front ends of said support rods (32), said support rods (32) having respective top edges thereof respectively abutted against respective bottom edges of said lugs (55) when said adjustment seat (46) is disposed in said horizontal position.

3. The leather bicycle saddle (10) as claimed in claim 1, wherein said seat block (48) of said adjustment seat (46) further comprises two first through holes (53) defined therein at opposing top and bottom sides of said mounting slot (50); said stop block (56) comprises a second through hole (562); said adjustment seat (46) further comprises a fastener (58) fastened to said first through holes (53) and said second through hole (562) to affix said stop block (56) to said seat block (48).

4. The leather bicycle saddle (10) as claimed in claim 1, wherein said seat block (48) of said adjustment seat (46) further comprises at least one locating groove (54) located at one of opposing top and bottom sides relative to said mounting slot (50); said stop block (56) comprises at least one locating rib (564) respectively engaged into said at least one locating groove (54).

5. The leather bicycle saddle (10) as claimed in claim 1, wherein said stop block (56) has one end thereof configured to fit the configuration of said head abutment portion (34) of said arch support (30) and stopped against said head abutment portion (34).

6. The leather bicycle saddle (10) as claimed in claim 1, wherein said seat block (48) and said stop block (56) of said adjustment seat (46) are made out of engineering plastics; the peripheral wall of said screw hole (52) of said adjustment seat (46) is made of metal.

7. A leather bicycle saddle (10'), comprising:
a leather cover (20);
an arc support (30) mounted at a bottom side of said leather cover (20), said arc support (30) having a front end terminating in a head abutment portion (34) and an opposing rear end affixed to a rear side of said leather cover (20); and
an adjustment device (40) mounted at said bottom side of said leather cover (20), said adjustment device (40) comprising a screw bolt holder (42), an adjustment screw bolt (44) and an adjustment seat (46'), said screw bolt holder (42) being affixed to a front bottom side of said leather cover (20) and comprising a stop wall (422) and a through hole (424) located at said stop wall (422), said adjustment screw bolt (44) comprising a bolt head (442) and a screw shank (444), said bolt head (442) being abutted against said stop wall (422) of said screw bolt holder (42) and being rotatably received in said through hole (424) of said screw bolt holder (42), said screw shank (444) having one end thereof fixedly connected to said bolt head (442), said adjustment seat (46') comprising a seat block (60) and a locating block (70) detachably fastened to said seat block (60),
**wherein** said seat block (60) comprises a first clamping portion (64) and said locating block (70) comprises a second clamping portion (74), said seat block (60) and said locating block (70) defining therein a screw hole (86), said first clamping portion (64) and said second clamping portion (74) being combined to create a retaining hole (78) for accommodating said head abutment portion (34) after fixation of said locating block (70) to said seat block (60), said screw hole (86) being adapted for receiving said screw shank (444) of said adjustment screw bolt (44), said adjustment seat (46') being forwardly turnable about said head abutment portion (34) from a horizontal position to an inclined position.

8. The leather bicycle saddle (10') as claimed in claim 7, wherein said seat block (60) comprises a first through hole (62); said locating block (70) comprises a second through hole (72); said adjustment seat (46') further comprises a screw-in sleeve (80), said screw-in sleeve (80) comprising a head (82) and a shank (84) extended from said head (82), said head (82) being stopped at one side of said locating block (70), said shank (84) being inserted through said second through hole (72) of said locating block (70) and said first through hole (62) of said seat block (60) and fixedly secured inside said seat block (60), said screw-in sleeve (80) having said screw hole (86) defined therein; said screw hole (86) cuts through said head (82) and said shank (84).

9. The leather bicycle saddle (10') as claimed in claim 8, wherein said seat block (60) of said adjustment seat (46') comprises two lugs (55); said arc support (30) comprises two support rods (32) and a head abutment portion (34) connected between front ends of said support rods (32), said support rods (32) having respective top edges thereof respectively abutted against respective bottom edges of said lugs (55) when said adjustment seat (46') is disposed in said horizontal position.

10. The leather bicycle saddle (10') as claimed in claim 8, wherein said adjustment seat (46') further comprises a rear cap (90) detachably fastened to said seat block (60) opposite to said locating block (70), said rear cap (90) defining therein a rear cap through hole (92), the rear cap through hole (92) of said rear cap (90) being kept in axial alignment with said first through hole (62) of said seat block (60) and said second through hole (72) of said stop block (70) for the passing of said adjustment screw bolt (44) after fixation of said rear cap (90) to said seat block (60).

## Patentansprüche

1. Leder-Fahrradsattel (10), welcher umfasst:
eine Leder-Abdeckung (20);
eine Bogenstütze (30), die an einer Unterseite der Leder-Abdeckung (20) befestigt ist, worin die Bogenstütze (30) ein Vorderende aufweist, das in einem Aufliege-Kopfbereich (34) endet und worin ein diesem abgewandtes Hinterende an einer Hinterseite der Leder-Abdeckung (20) befestigt ist; und
eine Anpassungseinrichtung (40), die an der Unterseite der Leder-Abdeckung (20) befestigt ist, worin die Anpassungseinrichtung (40) einen Schraubbolzenhalter (42), einen Anpassungs-Schraubbolzen (44) und einen Anpassungs-Sitz (46) umfasst, worin der Schraubbolzenhalter (42) an einer vorderen Unterseite der Leder-Abdeckung (20) befestigt ist und eine Stoppwand (422) und ein Durchgangsloch (424) umfasst, das an der Stoppwand (422) vorgesehen ist, worin der Anpassungs-Schraubbolzen (44) einen Bolzenkopf (442) und einen Schraubschaft (444) umfasst, worin der Bolzenkopf (442) gegen die Stoppwand (422) des Schraubbolzenhalters (42) aufliegt und in dem Durchgangsloch (424) des Schraubbolzenhalters (42) drehbar aufgenommen ist, worin der Schraubschaft (444) ein mit dem Bolzenkopf (442) fest verbundenes Ende aufweist, worin der Anpassungs-Sitz (46) einen Sitzblock (48) und einen Stoppblock (56) umfasst, worin der Sitzblock (48) darin einen Befestigungsschlitz (50) und ein Schraubloch (52) definiert, worin der Befestigungsschlitz (50) und das Schraubloch (52) voneinander getrennt sind, worin der Befestigungsschlitz (50) ein geschlossenes Ende (502) und ein abgewandtes offenes Ende (504) definiert, worin der Aufliege-Kopfbereich (34) der Bogenstütze (30) gegen das geschlossene Ende (502) des Befestigungsschlitzes (50) aufliegt,
worin der Stoppblock (56) entfernbar in dem offenen Ende (504) des Befestigungsschlitzes (50) in Eingriff kommt, und das Schraubloch (52) angepasst ist, den Schraubschaft (444) des Anpassungs-Schraubbolzens (44) aufzunehmen, worin der Anpassungs-Sitz (46) über den Aufliege-Kopfbereich (34) von einer horizontalen Position in eine geneigte Position vorwärts drehbar ist.

2. Leder-Fahrradsattel (10) nach Anspruch 1, worin der Sitzblock (48) des Anpassungs-Sitzes (46) zwei Vorsprünge (55) umfasst; worin die Bogenstütze (30) zwei Stützstangen (32) und einen Aufliege-Kopfbereich (34) umfasst, der zwischen den Vorderenden der Stützstangen (32) verbunden ist, worin die Stützstangen (32) entsprechende Oberränder aufweisen, die jeweils gegen entsprechende Unterränder der Vorsprünge (55) aufliegen, wenn der Anpassungs-Sitz (46) in der horizontalen Position angeordnet ist.

3. Leder-Fahrradsattel (10) nach Anspruch 1, worin der Sitzblock (48) des Anpassungs-Sitzes (46) weiter zwei erste Durchgangslöcher (53) umfasst, die darin an gegenüberliegenden Ober und Unterseiten des Befestigungsschlitzes (50) definiert sind; worin der Stoppblock (56) ein zweites Durchgangsloch (562) umfasst; worin der Anpassungs-Sitz (46) weiter ein Befestigungselement (58) umfasst, das an dem ersten Durchgangsloch (53) und dem zweiten Durchgangsloch (562) befestigt ist, um den Stoppblock (56) an dem Sitzblock (48) zu befestigen.

4. Leder-Fahrradsattel (10) nach Anspruch 1, worin der Sitzblock (48) des Anpassungs-Sitzes (46) weiter mindestens eine Anordnungsrille (54) umfasst, die an einem der gegenüberliegenden Ober- und Unterseite relativ zu dem Befestigungsschlitz (50) angeordnet ist; worin der Stoppblock (56) mindestens eine Anordnungsrippe (564) umfasst, die in der mindestens einen Anordnungsrille (54) entsprechend in Eingriff kommt.

5. Leder-Fahrradsattel (10) nach Anspruch 1, worin der Stoppblock (56) ein Ende aufweist, das ausgestaltet ist, der Ausgestaltung des Aufliege-Kopfbereiches (34) der Bogenstütze (30) angepasst zu sein, und gegen den Aufliege-Kopfbereich (34) abgestoppt ist.

6. Leder-Fahrradsattel (10) nach Anspruch 1, worin der Sitzblock (48) und der Stoppblock (56) des Anpassungs-Sitzes (46) aus technischen Kunststoffen gefertigt sind; und die Umfangswand des Schraubloches (52) des Anpassungs-Sitzes (46) aus Metall gefertigt ist.

7. Leder-Fahrradsattel (10'), welcher umfasst:
eine Leder-Abdeckung (20);
eine Bogenstütze (30), die an einer Unterseite der Leder-Abdeckung (20) befestigt ist, worin die Bogenstütze (30) ein Vorderende aufweist, das in einem Aufliege-Kopfbereich (34) endet und worin ein diesem abgewandtes Hinterende an einer Hinterseite der Leder-Abdeckung (20) befestigt ist; und
eine Anpassungseinrichtung (40), die an der Unterseite der Leder-Abdeckung (20) befestigt ist, worin die Anpassungseinrichtung (40) einen Schraubbolzenhalter (42), einen Anpassungs-Schraubbolzen (44) und einen Anpassungs-Sitz (46') umfasst, worin der Schraubbolzenhalter (42) an einer vorderen Unterseite der Leder-Abdeckung (20) befestigt ist und eine Stoppwand (422) und ein Durchgangsloch (424) umfasst, das an der Stoppwand (422) vorgesehen ist, worin der Anpassungs-Schraubbolzen (44) einen Bolzenkopf (442) und einen Schraubschaft (444) umfasst, worin der Bolzenkopf (442) gegen die Stoppwand (422) des Schraubbolzenhalters (42) aufliegt und in dem Durchgangsloch (424) des Schraubbolzenhalters (42) drehbar aufgenommen ist, worin der Schraubschaft (444) ein mit dem Bolzenkopf (442) fest verbundenes Ende aufweist, worin der Anpassungs-Sitz (46') einen Sitzblock (60) und einen Anordnungsblock (70) umfasst, der entfernbar an dem Sitzblock (60) befestigt ist, worin der Sitzblock (60) einen ersten Klemmbereich (64) umfasst, worin der Anordnungsblock (70) einen zweiten Klemmbereich (74) umfasst, worin der Sitzblock (60) und der Anordnungsblock (70) darin ein Schraubloch (86) definieren, worin der erste Klemmbereich (64) und der zweite Klemmbereich (74) zum Aufnehmen des Aufliege-Kopfbereiches (34) nach der Befestigung des Anordnungsblockes (70) an dem Sitzblock (60) zusammen ein Rückhalteloch (78) bilden, worin das Schraubloch (86) angepasst ist, den Schraubschaft (444) des Anpassungs-Schraubbolzens (44) aufzunehmen, worin der Anpassungs-Sitz (46') um den Aufliege-Kopfbereich (34) von einer horizontalen Position in eine geneigte Position vorwärts drehbar ist.

8. Leder-Fahrradsattel (10') nach Anspruch 7, worin der Sitzblock (60) ein erstes Durchgangsloch (62) umfasst; worin das Anordnungsloch (70) ein zweites Durchgangsloch (72) umfasst; worin der Anpassungs-Sitz (46') weiter eine Einschraubhülse (80) umfasst, worin die Einschraubhülse (80) einen Kopf (82) und einen Schaft (84) umfasst, der sich von dem Kopf (82) erstreckt, worin der Kopf (82) an einer Seite des Anordnungsblockes (70) abgestoppt ist, worin der Schaft (84) durch des zweite Durchgangsloch (72) des Anordnungsblockes (70) und das erste Durchgangsloch (62) des Sitzblockes (60) eingesetzt ist und in dem Sitzblock (60) fest gesichert ist, worin die Einschraubhülse (80) ein darin definiertes Schraubloch (86) aufweist; worin das Schraubloch (86) durch den Kopf (82) und den Schaft (84) geht.

9. Leder-Fahrradsattel (10') nach Anspruch 8, worin der Sitzblock (60) des Anpassungs-Sitzes (46') zwei Vorsprünge (55) umfasst; worin die Bogenstütze (30) zwei Stützstangen (32) und einen Aufliege-Kopfbereich (34) umfasst, der zwischen den Vorderenden der Stützstangen (32) verbunden ist, worin die Stützstangen (32) entsprechende Oberränder aufweist, die jeweils gegen entsprechende Unterränder der Vorsprünge (55) aufliegen, wenn der Anpassungs-Sitz (46') in der horizontalen Position angeordnet ist.

10. Leder-Fahrradsattel (10') nach Anspruch 8, worin der Anpassungs-Sitz (46') weiter eine Endkappe (90) umfasst, die dem Anordnungsblock (70) abgewandt an dem Sitzblock (60) entfernbar befestigt ist, worin die Endkappe (90) darin ein Endkappen-Durchgangsloch (92) definiert, worin das Endkappen-Durchgangsloch (92) der Endkappe (90) mit dem ersten Durchgangsloch (62) des Sitzblockes (60) und dem zweiten Durchgangsloch (72) des Stoppblockes (70) in axialer Ausrichtung gehalten wird, damit nach dem Befestigen der Endkappe (90) an dem Sitzblock (60) der Anpassungs-Schraubbolzen (44) hindurchgehen kann.

## Revendications

1. Selle de bicyclette en cuir (10), comprenant :
un recouvrement en cuir (20) ;
un support arqué (30) monté sur un côté inférieur dudit recouvrement en cuir (20), ledit support arqué (30) présentant une extrémité avant se terminant par une partie de butée de tête (34) et une extrémité arrière opposée fixée à un côté arrière dudit recouvrement en cuir (20) ; et
un dispositif de réglage (40) monté sur ledit côté inférieur dudit recouvrement en cuir (20), ledit dispositif de réglage (40) comprenant un support de boulon à vis (42), un boulon à vis de réglage (44) et un siège de réglage (46), ledit support de boulon à vis (42) étant fixé à un côté inférieur avant dudit recouvrement en cuir (20) et comprenant une paroi d'arrêt (422) et un trou traversant (424) situé au niveau de ladite paroi d'arrêt (422), ledit boulon à vis de réglage (44) comprenant une tête de boulon (442) et une tige de vis (444), ladite tête de boulon (442) étant en butée contre ladite paroi d'arrêt (422) dudit support de boulon à vis (42) et étant logée de manière rotative dans ledit trou traversant (424) dudit support de boulon à vis (42), ladite tige de vis (444) présentant une extrémité correspondante reliée à demeure à ladite tête de boulon (442), ledit siège de réglage (46) comprenant un bloc de siège (48) et un bloc d'arrêt (56), ledit bloc de siège (48) définissant en son sein une fente de montage (50) et un trou de vis (52), ladite fente de montage (50) et ledit trou de vis (52) étant maintenus écartés, ladite fente de montage (50) définissant une extrémité fermée (502) et une extrémité ouverte opposée (504), ladite partie de butée de tête (34) dudit support arqué (30) étant en butée contre ladite extrémité fermée (502) de ladite fente de montage (50),
ledit bloc d'arrêt (56) étant en prise de manière amovible dans ladite extrémité ouverte (504) de ladite fente de montage (50) et ledit trou de vis (52) étant conçu pour recevoir ladite tige de vis (444) dudit boulon à vis de réglage (44), ledit siège de réglage (46) pouvant tourner vers l'avant autour de ladite partie de butée de tête (34) à partir d'une position horizontale vers une position inclinée.

2. Selle de bicyclette en cuir (10) selon la revendication 1, ledit bloc de siège (48) dudit siège de réglage (46) comprenant deux pattes (55) ; ledit support arqué (30) comprenant deux tiges support (32) et une partie de butée de tête (34) reliée entre des extrémités avant desdites tiges support (32), lesdites tiges support (32) présentant des bords supérieurs respectifs correspondants respectivement en butée contre des bords inférieurs respectifs desdites pattes (55) lorsque ledit siège de réglage (46) est disposé dans ladite position horizontale.

3. Selle de bicyclette en cuir (10) selon la revendication 1, ledit bloc de siège (48) dudit siège de réglage (46) comprenant en outre deux premiers trous traversants (53) définis en son sein au niveau des côtés supérieur et inférieur opposés de ladite fente de montage (50) ; ledit bloc d'arrêt (56) comprenant un deuxième trou traversant (562) ; ledit siège de réglage (46) comprenant en outre un élément de fixation (58) fixé auxdits premiers trous traversants (53) et audit deuxième trou traversant (562) pour fixer ledit bloc d'arrêt (56) audit bloc de siège (48).

4. Selle de bicyclette en cuir (10) selon la revendication 1, ledit bloc de siège (48) dudit siège de réglage (46) comprenant en outre au moins une rainure de positionnement (54) située au niveau de l'un des côtés supérieur et inférieur opposés par rapport à ladite fente de montage (50) ; ledit bloc d'arrêt (56) comprenant au moins une nervure de positionnement (564) en prise respectivement dans ladite au moins une rainure de positionnement (54).

5. Selle de bicyclette en cuir (10) selon la revendication 1, ledit bloc d'arrêt (56) présentant une extrémité correspondante conçue pour s'adapter à la configuration de ladite partie de butée de tête (34) dudit support arqué (30) et arrêtée contre ladite partie de butée de tête (34).

6. Selle de bicyclette en cuir (10) selon la revendication 1, ledit bloc de siège (48) et ledit bloc d'arrêt (56) dudit siège de réglage (46) étant réalisés en plastique industriel ; la paroi périphérique dudit trou de vis (52) dudit siège de réglage (46) étant constituée de métal.

7. Selle de bicyclette en cuir (10'), comprenant :
un recouvrement en cuir (20) ; un support arqué (30) monté sur un côté inférieur dudit recouvrement en cuir (20), ledit support arqué (30) présentant une extrémité avant se terminant par une partie de butée de tête (34) et une extrémité arrière opposée fixée à un côté arrière dudit recouvrement en cuir (20) ; et
un dispositif de réglage (40) monté sur ledit côté inférieur dudit recouvrement en cuir (20), ledit dispositif de réglage (40) comprenant un support de boulon à vis (42), un boulon à vis de réglage (44) et un siège de réglage (46'), ledit support de boulon à vis (42) étant fixé à un côté inférieur avant dudit recouvrement en cuir (20) et comprenant une paroi d'arrêt (422) et un trou traversant (424) situé au niveau de ladite paroi d'arrêt (422), ledit boulon à vis de réglage (44) comprenant une tête de boulon (442) et une tige de vis (444), ladite tête de boulon (442) étant en butée contre ladite paroi d'arrêt (422) dudit support de boulon à vis (42) et étant logée de manière rotative dans ledit trou traversant (424) dudit support de boulon à vis (42), ladite tige de vis (444) présentant une extrémité correspondante reliée à demeure à ladite tête de boulon (442), ledit siège de réglage (46') comprenant un bloc de siège (60) et un bloc de positionnement (70) fixé de manière amovible audit bloc de siège (60),
ledit bloc de siège (60) comprenant une première partie de serrage (64) et ledit bloc de positionnement (70) comprenant une deuxième partie de serrage (74), ledit bloc de siège (60) et ledit bloc de positionnement (70) définissant en leur sein un trou de vis (86), ladite première partie de serrage (64) et ladite deuxième partie de serrage (74) étant combinées pour créer un trou de retenue (78) destiné à recevoir ladite partie de butée de tête (34) après fixation dudit bloc de positionnement (70) audit bloc de siège (60), ledit trou de vis (86) étant conçu pour recevoir ladite tige de vis (444) dudit boulon à vis de réglage (44), ledit siège de réglage (46') pouvant tourner vers l'avant autour de ladite partie de butée de tête (34) à partir d'une position horizontale vers une position inclinée.

8. Selle de bicyclette en cuir (10') selon la revendication 7,
ledit bloc de siège (60) comprenant un premier trou traversant (62) ; ledit bloc de positionnement (70) comprenant un deuxième trou traversant (72) ; ledit siège de réglage (46') comprenant en outre un manchon taraudé (80), ledit manchon taraudé (80) comprenant une tête (82) et une tige (84) s'étendant à partir de ladite tête (82), ladite tête (82) étant arrêtée au niveau d'un côté dudit bloc de positionnement (70), ladite tige (84) étant insérée à travers ledit deuxième trou traversant (72) dudit bloc de positionnement (70) et ledit premier trou traversant (62) dudit bloc de siège (60) et étant fixée à demeure à l'intérieur dudit bloc de siège (60), ledit manchon taraudé (80) présentant ledit trou de vis (86) défini en son sein ; ledit trou de vis (86) coupant à travers ladite tête (82) et ladite tige (84).

9. Selle de bicyclette en cuir (10') selon la revendication 8,
ledit bloc de siège (60) dudit siège de réglage (46') comprenant deux pattes (55) ; ledit support arqué (30) comprenant deux tiges support (32) et une partie de butée de tête (34) reliée entre des extrémités avant desdites tiges support (32), lesdites tiges support (32) présentant des bords supérieurs respectifs correspondants butant respectivement contre les bords inférieurs respectifs desdites pattes (55) lorsque ledit siège de réglage (46') est disposé dans ladite position horizontale.

10. Selle de bicyclette en cuir (10') selon la revendication 8, ledit siège de réglage (46') comprenant en outre un bouchon arrière (90) fixé de manière amovible audit bloc de siège (60) opposé audit bloc de positionnement (70), ledit bouchon arrière (90) définissant en son sein un trou traversant de bouchon arrière (92), le trou traversant de bouchon arrière (92) dudit bouchon arrière (90) étant maintenu en alignement axial avec ledit premier trou traversant (62) dudit bloc de siège (60) et ledit deuxième trou traversant (72) dudit bloc d'arrêt (70) pour le passage dudit boulon à vis de réglage (44) après fixation dudit bouchon arrière (90) audit bloc de siège (60).
